Europäisches Patentamt

European Patent Office

Office européen des brevets

(19)

(11) Publication number: **0 107 870**

**B1**

(12) # EUROPEAN PATENT SPECIFICATION

(45) Date of publication of patent specification: **16.09.87**

(51) Int. Cl.[4]: **C 01 F 5/38, C 05 C 1/02**

(21) Application number: **83201392.4**

(22) Date of filing: **29.09.83**

(54) **Production of magnesium nitrate solutions.**

(30) Priority: **01.10.82 GB 8228085**
     **22.01.83 GB 8301809**

(43) Date of publication of application:
     **09.05.84 Bulletin 84/19**

(45) Publication of the grant of the patent:
     **16.09.87 Bulletin 87/38**

(84) Designated Contracting States:
     **AT BE DE FR IT NL SE**

(56) References cited:
     **EP-A-0 075 354**
     **DE-C- 391 361**
     **DE-C- 590 855**
     **US-A-1 844 862**

(73) Proprietor: **STAMICARBON B.V.**
     **Mijnweg 1**
     **NL-6167 AC Geleen (NL)**

(72) Inventor: **Kelly, William John**
     **Lyndhurst Wrawby Road**
     **Brigg South Humberside BN20 8DR (GB)**
     Inventor: **Bluckert, Neville Paul**
     **Norwell Cottage Church Street**
     **Kirton-in-Lindsey Lincolnshire DN18 4RN (GB)**

(74) Representative: **Hoogstraten, Willem Cornelis**
     **Roeland et al**
     **OCTROOIBUREAU DSM Postbus 9**
     **NL-6160 MA Geleen (NL)**

**The file contains technical information submitted after the application was filed and not included in this specification**

# Description

This invention relates to a process for preparing magnesium nitrate solutions.

From US—A—1,844,862 is known a process for the preparation of magnesium nitrate by neutralising nitric acid with a commercially available grade of magnesium oxide or magnesium carbonate. A disadvantage of such a process is that the impurities especially iron and aluminium compounds present in the commercial grades of magnesium compounds employed in the neutralisation step are also present in the magnesium nitrate solution.

Since the use of purified magnesium compounds in the production of the magnesium nitrate is prohibitively expensive, the use of impure magnesium nitrate solutions has continued.

We have now discovered a process for the production of a magnesium nitrate solution of acceptable purity from the commercially available grades of magnesium salts which produces a substantially pure magnesium nitrate.

The invention provides a process for the production of a magnesium nitrate solution which comprises the steps of

(a) Adding a water insoluble magnesium compound to water so as to form an aqueous suspension thereof;

(b) Adding 50—60% w/w nitric acid to the suspension formed in step (a) in such an amount that the final pH of the reaction medium is in the range 5.0 to 6.0;

(c) Filtering the product from step (b) so as to separate an aqueous solution comprising magnesium nitrate as the filtrate from any insoluble material.

We have discovered that these novel procedures lead to the separation of iron and aluminium salts during step (b) which are readily removed from the filtrate in step (c). Thus the process of the invention leads to the formation of a relatively pure magnesium nitrate from a commercial grade of magnesium compound.

The process of the present invention may therefore utilise any grade of magnesium compound as a starting material. The preferred compounds for present use are magnesium oxide, magnesium hydroxide and magnesium carbonate, the use of magnesium oxide being especially preferred. In particular, the commercial grades of magnesium oxide obtained by calcination of magnesite or of magnesium compounds precipitated from sea water with dolomite which contain about 93 to 96% by weight of magnesium oxide and various impurities especially the oxides of iron, aluminium and silicon, may be employed.

The magnesium compound is preferably in the form of finely divided particles since these are more easily dispersed in the water. The preferred particle size is in the range 50 to 200 micrometres.

The magnesium compound is suspended in water. Sufficient water should be used to ensure that a homogenous suspension is formed upon agitation but the use of an excessive quantity of water should be avoided in order to minimise dilution of the magnesium nitrate product. In general, we prefer to use from 2.5 to 3.5 g of water per g of magnesium compound (expressed as magnesium oxide) which is added.

The nitric acid is then added to the suspension at a controlled rate with thorough mixing. The actual temperature of the reaction medium is not critical, but temperatures which are sufficiently high to bring about the evolution of brown nitrogen oxide fumes produced by decomposition of the acid are undesirable.

The concentration of the nitric acid reactant is also not crucial. Again, if too strong an acid is employed there will be a greater tendency to evolve nitrogen oxide fumes. If too weak an acid is employed, the product solution will be correspondingly more dilute. In general, we prefer to employ acids containing 55 to 58% w/w $HNO_3$.

The manner in which the reaction is carried out can have the significant effect upon the course of the reaction. If localised areas of high acid concentration and high temperature are allowed to form there is an increased tendency for any oxides of iron and aluminium which may be present to dissolve and on further mixing to reprecipitate in a form which is difficult to filter. It is therefore preferable to control the rate of acid addition and ensure that the reactants are thoroughly and rapidly mixed.

The amount of nitric acid which is added should not exceed that required to neutralise completely the magnesium compound. Preferably not more than 99% of this quantity of acid is employed. Thus, preferably, the processes of the invention comprise the addition of from 90 to 99%, more preferably 96 to 99%, of the quantity of nitric acid required to completely neutralise the magnesium salt.

The control of the degree of neutralisation can conveniently be achieved by monitoring the pH of the reaction medium. The final pH is in the range 5.0 to 6.0, preferably 5.2 to 5.4. Lower pH's indicate that excess acid has been added and increase the degree of contamination of the filtrate with soluble iron and aluminium compounds.

The reaction product is then filtered so as to separate the insolubles and collect a clear filtrate which is a solution of magnesium nitrate. The impurities are readily filterable and can be separated using conventional filtration techniques e.g. a pressure leaf filter.

The concentration of magnesium nitrate in the filtrate is below saturation so as to avoid any precipitation of magnesium nitrate, e.g. below 40% w/w at ambient temperature. The quantity of water utilised in the reaction is preferably adjusted so that the concentration of magnesium nitrate in the filtrate is in the range 32 to 40, e.g. 34 to 38% w/w. The production of more dilute solutions is less preferred since they are dried in the fertiliser production process and more dilute solutions thereby simply increase the evaporator

2

load in the process. More concentrated solutions can be used but may require heating of pipelines and vessels to avoid crystallisation.

Conventional prilled and granulated fertilisers consisting essentially of, or comprising significant quantities of, ammonium nitrate suffer from two problems which render their storage and application to the land more difficult. Firstly, because of a change in the crystal structure of ammonium nitrate which occurs at about 32°C, they tend to break down to form very fine particles which are difficult to handle, and secondly, they tend to cake on prolonged storage because of water solubility of ammonium nitrate. A method of alleviating these two difficulties which has been widely adopted is the addition of magnesium nitrate to the fertiliser, which additive acts as a stabiliser for the ammonium nitrate and as an internal dessicant since it absorbs water to form a dry hydrate and thus reduces the tendency of the fertiliser to cake.

The magnesium nitrate obtained by the process of the present invention is extremely suitable for use as a stabilising agent in ammonium nitrate as it has been discovered that the addition of additives containing impurities, especially iron and aluminium compounds, to fertiliser plants is disadvantageous in that increased fouling of the heat exchange surfaces and the spray devices is encountered.

The magnesium nitrate additive is added to the ammonium nitrate composition, especially ammonium nitrate fertiliser in conventional quantities, normally about 0.5% by weight as MgO of the ammonium nitrate. Preferably quantities of from 0.2 to 1.0, e.g. 0.3 to 0.7% by weight are added.

The magnesium nitrate may be added to any convenient point in the ammonium nitrate manufacturing operation provided that it is subsequently dehydrated so that it is not in the fully hydrated form at the end of the manufacturing process and is thereby capable of functioning as an internal dessicant. Thus, in a typical process for the production of a prilled ammonium nitrate fertiliser the magnesium nitrate must be added prior to the final evaporation stage following which the ammonium nitrate is fed to the prilling tower. We prefer to add the nitrate solution to the ammonia/nitric acid reaction vessel for reason of convenience, but equally it can be introduced at a later stage of the manufacturing procedure.

The presence of some iron and aluminium impurities in the magnesium nitrate additive and the fertiliser may be tolerated. The proportion of these impurities is preferably less than 100 ppm, e.g. less than 10 ppm (as $Fe_2O_3$) of iron and less than 100 ppm, e.g. less than 20 ppm (as $Al_2O_3$) of aluminium in the nitrate additive.

The invention is illustrated by the following example:

### Example

To 300 ml water at 20°C an amount of 100 g magnesium oxide was added, on which the mixture was stirred for 15 minutes.

Use was made of a technical-grade product having an average particle size of 75 micrometres and a specific surface of about 50 m²/g which contained 2000 ppm (parts per million) $Fe_2O_3$, 1800 ppm $Al_2O_3$, 8000 ppm $SiO_2$ and 1.3 wt.% CaO.

Whilst stirring intensively, a 55 wt.% $HNO_3$ solution was added to the suspension obtained, the metering rate being such that after 1 hour the pH of the mixture was 6.0. While the acid was being added, the temperature rose to about 105°C.

Subsequently, such an amount of 55 wt.% $HNO_3$ was very slowly added to the mixture, which was meanwhile being stirred, that the pH of the mixture was 5.3 after another hour. The solution obtained was filtered, the filtrate being a clear solution of magnesium nitrate which contained 1 ppm $Fe_2O_3$, about 2 ppm $Al_2O_3$ and 1 ppm $SiO_2$.

### Claims

1. A process for the production of a magnesium nitrate solution which comprises the steps of:
(a) Adding a water insoluble magnesium compound to water so as to form an aqueous suspension thereof;
(b) Adding 50—60% w/w nitric acid to the suspension formed in step (a) in such an amount that the final pH of the reaction medium is in the range 5.0 to 6.0;
(c) Filtering the product from step (b) so as to separate magnesium nitrate as the filtrate from any insoluble material.

2. A process according to claim 1, wherein the magnesium compound comprises particulate material having a particle size of from 50 to 200 micrometres.

3. A process according to either of claims 1 or 2, wherein the magnesium compound is suspended in from 2.5 to 3.5 grams of water per gram of magnesium compound (expressed as equivalent weight of magnesium oxide).

4. A process according to any of claims 1 to 3, wherein the nitric acid comprises from 55 to 58% w/w of nitric acid.

5. A process according to any of the preceding claims, wherein the amount of nitric acid which is added in step (b) is from 90 to 99% of the amount of acid required to completely neutralise the magnesium salt.

6. A process according to claim 5, wherein the amount of nitric acid which is added in step (b) is from 96 to 99% of the amount required to completely neutralise the magnesium salt.

7. A process according to any of the preceding claims, wherein the final pH of the reaction medium is in the range 5.2 to 5.4.

8. A process according to any of the preceding claims, wherein the concentration of magnesium nitrate in the filtrate produced in step (c) is in the range 32 to 40% w/w.

### Patentansprüche

1. Verfahren zur Herstellung einer Magnesiumnitratlösung, gekennzeichnet durch die Stufen:

(a) Zusatz einer wasserunlöslichen Magnesiumverbindung zu Wasser, um eine wässerige Suspension hiervon zu bilden;

(b) Zusatz von 50—60 % (Gew/Gew) Salpetersäure zu der in Stufe (a) gebildeten Suspension in einer solchen Menge, daß der abschließende ph-Wert des Reaktionsmediums im Bereich von 5,0 bis 6,0 liegt;

(c) Filtrieren des Produktes aus Stufe (b), um als Filtrat Magnesiumnitrat von allem unlöslichen Material abzutrennen.

2. Verfahren nach Anspruch 1, dadurch gekennzeichnet, daß die Magnesiumverbindung ein teilchenförmiges Material mit einer Teilchengröße von 50 bis 200 µm ist.

3. Verfahren nach Anspruch 1 oder 2, dadurch gekennzeichnet, daß die Magnesiumverbindung in 2,5 bis 3,5 g Wasser pro g Magnesiumverbindung (ausgedrückt als Äquivalentgewicht von Magnesiumoxid) suspendiert wird.

4. Verfahren nach einem der Ansprüche 1 bis 3, dadurch gekennzeichnet, daß die Salpetersäure eine 55 bis 58 % (Gew/Gew) Salpetersäure ist.

5. Verfahren nach einem der vorhergehenden Ansprüche, dadurch gekennzeichnet, daß die in Stufe (b) zugesetzte Menge an Salpetersäure 90 bis 99 % der für die vollständige Neutralisation des Magnesiumsalzes erforderlichen Menge beträgt.

6. Verfahren nach Anspruch 5, dadurch gekennzeichnet, daß die in Stufe (b) zugesetzte Menge an Salpetersäure 96 bis 99 % der für die vollständige Neutralisation des Magnesiumsalzes erforderlichen Menge beträgt.

7. Verfahren nach einem der vorhergehenden Ansprüche, dadurch gekennzeichnet, daß der abschließende pH-Wert des Reaktionsmediums im Bereich von 5,2 bis 5,4 liegt.

8. Verfahren nach einem der vorhergehenden Ansprüche, dadurch gekennzeichnet, daß die Konzentration an Magnesiumnitrat in dem in Stufe (c) erhaltenen Filtrat im Bereich von 32 bis 40 % (Gew/Gew) liegt.

**Revendications**

1. Procédé de production d'une solution de nitrate de magnésium, qui consiste:

(a) à ajouter un composé de magnésium insoluble dans l'eau, à de l'eau de manière à former une suspension aqueuse de celui-ci;

(b) à ajouter 50 à 60 % en poids d'acide nitrique à la suspension formée au stade (a) en une quantité telle que le pH final du milieu de réaction soit de 5,0 à 6,0;

(c) à filtrer le produit du stade (b) de manière à séparer le nitrate de magnésium sous forme de filtrat à partir d'une matière insoluble quelconque.

2. Procédé selon la revendication 1, dans lequel le composé de magnésium comprend une matière particulaire ayant une grosseur de particules de 50 à 200 µm.

3. Procédé selon la revendication 1 ou 2, dans lequel on met en suspension le composé de magnésium dans 2,5 à 3,5 g d'eau par g de composé de magnésium (exprimé en poids équivalent d'oxyde de magnésium).

4. Procédé selon l'une quelconque des revendications 1 à 3, dans lequel l'acide nitrique comprend de 55 à 58 % en poids d'acide nitrique.

5. Procédé selon l'une quelconque des revendications précédentes, dans lequel la quantité d'acide nitrique qu'on ajoute au stade (b) est de 90 à 99 % de la quantité de l'acide exigée requise neutraliser complètement le sel de magnésium.

6. Procédé selon la revendication 5, dans lequel la quantité d'acide nitrique qu'on ajoute au stade (b) est de 96 à 99 % de la quantité requise pour neutraliser complètement le sel de magnésium.

7. Procédé selon l'une quelconque des revendications précédentes, dans lequel le pH final du milieu de réaction est de 5,2 à 5,4.

8. Procédé selon l'une quelconque des revendications précédentes, dans lequel la concentration du nitrate de magnésium dans le filtrat produit au stade (c) est de 32 à 40 % en poids.